# EUROPEAN PATENT SPECIFICATION

(11) **EP 1 937 004 B1**
(45) Date of publication and mention of the grant of the patent: **15.08.2012**
(21) Application number: 06742141.2
(22) Date of filing: 08.06.2006
(51) Int. Cl.: H04L 29/06

(54) **A ROUTE CONTROLLING METHOD OF MULTIMEDIA CALL AND THE APPARATUS THEREOF**
ROUTENSTEUERVERFAHREN EINES MULTIMEDIA-ANRUFS UND VORRICHTUNG DAFÜR
APPAREIL ET PROCEDE DE GESTION DE REACHEMINEMENT D'APPEL MULTIMEDIA

(30) Priority: 08.06.2005 CN 200510075079
(43) Date of publication of application: 25.06.2008
(73) Proprietor: Huawei Technologies Co., Ltd., Longgang District, Shenzhen Guangdong 518129 (CN)
(72) Inventor: WU, Yong, Shenzhen, Guangdong 518129 (CN)
(74) Representative: Pfenning, Meinig & Partner GbR
(86) International application number: PCT/CN2006/001255
(87) International publication number: WO 2006/131076

(56) References cited:
- WO-A-02/052825
- WO-A-03/021914
- WO-A-2005/032164
- WO-A1-01/03401
- WO-A1-2005/032164
- CN-A- 1 390 006

## Description

### Field of the Invention

The present invention relates to the technical field of intelligent network (IN), in particular, to a method and a device for routing control in a multimedia call.

### Background of the Invention

An intelligent network is a network to introduce intelligent network function entities into an existing communication network system, so as to perform controlling on an intelligent call service. A low layer communication network is connected with a high layer intelligent network by introducing the intelligent network function entities such as a service switching point (SSP) into the existing communication network system, and thereby an intelligent network is formed. As a high layer service network in the existing communication network system, the intelligent network can generate and implement various new services for the existing communication network system quickly, conveniently, flexibly, economically and efficiently, so that a user may obtain various information required more conveniently and flexibly.

An outstanding characteristic of the intelligent network is that the switching function and the service control function of the network are independent of each other. With the support of No. 7 signaling network and the large centralized database, the intelligent network is able to accomplish the logic processing of the intelligent service, and control a switch to accomplish a corresponding processing for an intelligent call.

One of the basic functions of the intelligent network is instructing a switch to perform routing control for a service connection process. The intelligent network may instruct the switch to keep on using the original routing for the present call, or may instruct the switch to connect the call to a specific destination point by modifying routing information of the present call according to the requirements raised by a new intelligent service. For example, in a ring back tone (RBT) service based on the intelligent network, when during the call the user triggers this service in the intelligent network, the intelligent network may modify the routing information of the present call, so as to instruct the switch to route the call to a RBT service playing platform by modifying the routing information of the present call.

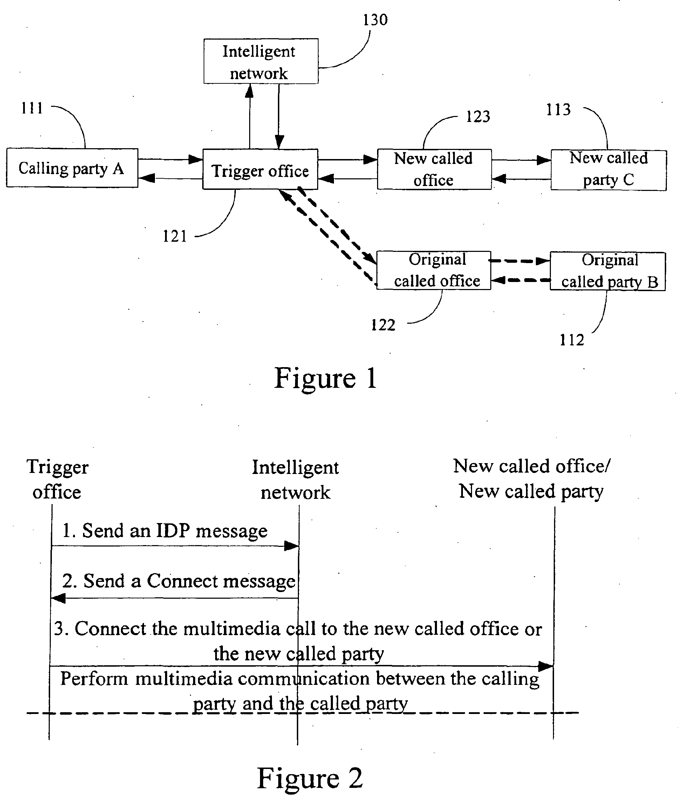

Figure 1 is a schematic diagram showing the processing procedure of performing routing control on the service connection process by the intelligent network in the prior art. The process of performing routing control on a call by the intelligent network according the requirements of the intelligent service is as follows:

First, if a calling party A 111 wants to call an original called party B 112, it is required to connect the call to the original called party B 112 via an office 121 for triggering the intelligent service (trigger office for short. Generally it is a user trigger office, or may be an independent office point) and an original called office 122.

When the call is initiated or during the call, an intelligent service, such as a call transfer service, is introduced, the trigger office 121 may send a trigger message to the intelligent network 130 and notify the intelligent network 130 to trigger the corresponding intelligent service.

The intelligent network 130 modifies the routing address of the present call according to the trigger message. For example, the called number is modified from the number of the called party B 112 to the number of the called party C 113, or is modified to the address of a prefix device with which the call may be routed to a new called office 123.

The intelligent network 130 notifies the trigger office 121 of the modified routing address. The trigger office 121 connects the present call to the new called party C 113 or a specified office prefix device via the new called office 123 according to the modified routing address.

At present, during a multimedia call in the intelligent network, not only the traditional voice media stream but also the video media stream exists in the call generally, so that the user may enjoy the multimedia service containing voice and video simultaneously. Therefore, when the intelligent network performs control on the call, the routing control should be performed respectively for the different media streams in a multimedia call. In other words, the routing control should be performed respectively for the voice media stream and the video media stream in a multimedia call, so as to meet the requirements in the broad development of the multimedia service in the intelligent network.

The multimedia call may be implemented based on the circuit switch (CS) or based on the packet switch (PS). At present, in the multimedia call implemented based on the CS, the voice media stream and the video media stream in the multimedia call cannot be distinguished from each other during the process of performing routing control on the multimedia call by the intelligent network according to the requirements of the multimedia intelligent service. Figure 2 is a schematic diagram showing the process of performing routing control on the multimedia call by the intelligent network in the CS domain in the prior art. The implementing process is as follows:

1. During the process of performing connection for a multimedia call of a calling party, the trigger office finds that the calling party or a called party has applied for an intelligent service. Therefore, the trigger office sends an initial detect point message (IDP message) carrying corresponding intelligent data to a service control point (SCP) in the intelligent network, so as to trigger the corresponding intelligent service.

2. The SCP runs a relevant intelligent service logic according to the intelligent data carried in the IDP message received. If the routing information of the present multimedia call should be modified due to this intelligent service, the routing information of the present multimedia call is modified, and the modified new destination routing address (DRA) where the present call should be routed is packaged into a Connect message and sent to the trigger office.

3. The trigger office routes the present multimedia call to a new called office according to the new destination routing address packaged in the Connect message received, and the new called office connects the present multimedia call to the new called party.

Hereafter, a normal multimedia communication (including the voice media communication and the video media communication) is implemented between the calling party and the called party.

From above, it can be seen that in the prior art, when the multimedia communication is implemented in the CS domain, the routing information sent to the trigger office via the Connect message by the SCP in the intelligent network only includes a modified routing address parameter, and the trigger office can perform rerouting for the whole multimedia call only according to this unique modified routing address received. However, the SCP in the intelligent network does not distinguish the voice media stream from the video media stream in the present multimedia call at all, so as to perform routing control respectively for the voice media stream and the video media stream in the same multimedia call. Therefore, the development potential of the multimedia service in the intelligent network is greatly limited.
WO 02/052825 A relates to a method and system for establishing a connection to a terminal device, wherein a user capability information is set in an outband signaling message, and a capability negotiation is performed by transmitting said outband signaling message via an outband control channel. Thereby, the user capability, such as a multimedia session composition, can be already negotiated during the outband call setup phase, and a corresponding inband negotiation can be avoided.
WO 03/021914 A provides a method for establishing video communication between a video-enabled and non-video-enabled communication device. Video signals generated by the video-enabled device during the two-way audio communication are captured and cached within the server. The cached video signals may be subsequently retrieved and displayed by a computer terminal or video-enabled communication device.
WO 01/03401 A1 discloses a connection control for separate media components forming a multimedia stream transferred between two end-points. Media component control signaling between the end-points is monitored by routing means. Then, the routing means inform control means about separate media components, recognize the separate media components associated with a call between the two end-points and apply a connection control issued by the control means to the separate media components.

### Summary of the Invention

The present invention provides a method and a device for routing control in a multimedia call, so that the intelligent network may perform routing control for different media streams in the same multimedia call respectively, which is advantageous for promoting the development and application of the multimedia service in the intelligent network.

According to an aspect of the invention, a method for routing control in the multimedia call is provided, which includes:
sending, by a switch in a trigger office, an Initial Detection Point, IDP, message containing information of a calling party and/or a called party, parameters indicating a type of the call to a service control point, SCP, when the switch in the trigger office learns that a calling party or a called party has applied for an intelligent service according to the information of the calling party and the called party;
determining, by the SCP, whether the type of the call is a multimedia call and obtaining the intelligent service information relevant to the intelligent service that the calling party and/or the called party have/has applied for according to the IDP message received;

configuring, by a service control point in an intelligent network, corresponding routing information for different media streams in the same multimedia call in the circuit switch domain when running (S114) a corresponding intelligent service logic according to the intelligent service information obtained;

notifying, by the SCP, a switch in a trigger office responsible for connecting the multimedia call of the routing information configured for the different media streams in a Connect message, and

performing, by the switch in the trigger office, routing connection for the different media streams according to the routing information for the different media streams received:

before the process of configuring the corresponding routing information, the method further includes a process of reporting, by the switch in the trigger office responsible for connecting the multimedia call, a list of media stream types contained in the multimedia call to the service control point; and the process of configuring the corresponding routing information specifically includes: configuring, by the service control point, the corresponding routing information for the different media streams in the same multimedia call according to the list of the media stream types reported by the switch in the trigger office.

The different media streams comprise a voice media stream and a video media stream.

Before the process of configuring the corresponding routing information, the method further includes:

indicating, by the switch in the trigger office, a type of a call to be connected with a Bearer Capability parameter and a Low Layer Compatibility parameter in an Initial Detection Point message; and

sending the Initial Detection Point message, into which the Bearer Capability parameter and the Low Layer Compatibility parameter are packaged, to the service control point;

determining, by the service control point, whether the type of the present call is a multimedia call according to the Bearer Capability parameter and the Low Layer Compatibility parameter in the Initial Detection Point message received; if yes, the process of configuring the corresponding routing information is performed.

The type of the call includes a pure voice call and a multimedia call.

The routing connection includes: performing, by the switch in the trigger office, the routing connection for the voice media stream according to the routing information of the voice media stream based on an ISDN User Part signaling.

The routing connection includes: performing, by the switch in the trigger office, the routing connection for the video media stream according to the routing information of the video media stream based on the ISDN User Part signaling or a Session Initial Protocol signaling.

Before the process of configuring the corresponding routing information, the method further includes:

packaging, by the trigger office and the switch in the trigger office, information of a calling party and/or a called party, who have/has applied for an intelligent service, into an Initial Detection Point message, and sending the Initial Detection Point message to the service control point; and

obtaining, by the service control point, by indexing from a local database intelligent service information relevant to the intelligent service that the calling party and/or the called party have/has applied for according to the information of the calling party and/or the called party packaged in the Initial Detection Point message received.

The process of configuring the corresponding routing information is performed when running a corresponding intelligent service logic according to the intelligent service information obtained.

The notification of the routing information configured includes: packaging, by the service control point, the routing information into a Connect message sent to the switch in the trigger office, and notifying the switch in the trigger office of the routing information.

Between the process of configuring the corresponding routing information and the process of notifying the switch in the trigger office of the routing information configured, the method further includes: sending, by the service control point, a Request Report Basic Call Status Module Event message to the switch in the trigger office, for requesting the switch in the trigger office to report information of events occurring during the routing connection of the multimedia call.

After the routing connection, the method further includes: packaging, by the switch in the trigger office, the information of the events occurring during the routing connection of the multimedia call into an Event Report Basic Call Status Module message, and sending the message to the service control point.

The information of the events includes: called party being busy, routing connection failure, or calling party abandonment.

The method further includes: sending, by the service control point, a Release Call message to the switch in the trigger office after the Event Report Basic Call Status Module message is received; and releasing, by the switch in the trigger office, a communication connection with the service control point when the Release Call message is received.

According to another aspect of the invention, a device for routing control is provided in a multimedia call disposed in an intelligent network, which includes:
a call type determining unit, adapted to determine whether a present call is a multimedia call and obtain intelligent service information relevant to an intelligent service that a calling party and/or a called party have/has applied for according to an Initial Detection Point message containing information of the calling party and/or the called party, parameters indicating a type of the call, and if the present call is a multimedia call, the call type determining unit triggers the routing information configuring unit;

a routing information configuring unit, adapted to configure corresponding routing information for different media streams in the same multimedia call respectively in the circuit switch domain when running a corresponding intelligent service logic according to the intelligent service information obtained; and

a routing information notifying unit, adapted to notify a switch in a trigger office responsible for connecting the multimedia call of the routing information configured for the different media streams in a Connect message.

The routing information configuring unit configures the corresponding routing information for the different media streams in the multimedia call respectively according to a list of media stream types reported by the switch in the trigger office.

The routing information notifying unit notifies the switch in the trigger office of the routing information by packaging the routing information into a Connect message which is sent to the switch in the trigger office.

The device for routing control in the multimedia call further includes: a call type determining unit, adapted to determine whether a present call is a multimedia call according to a Bearer Capability parameter and a Low Layer Compatibility parameter in an Initial Detection Point message received, if yes, the call type determining unit triggers the routing information configuring unit.

The device for routing control in the multimedia call further includes: an event report requesting unit, adapted to send a Request Report Basic Call Status Module Event message to the switch in the trigger office, so as to request the switch in the trigger office to report information of events occurring during the routing connection of the multimedia call.

The beneficial technical effects that can be achieved with the invention are as follows:

The invention provides the solution of configuring, by the SCP in the intelligent network, corresponding routing information for different media stream type according to the different media streams contained in a multimedia call; notifying the switch in the trigger office of the routing information configured; and performing, by the switch in the trigger office, routing connection for each media call type according to the routing information of each media stream type. Therefore, it is realized that the SCP can perform routing control for each media stream type contained in the same multimedia call respectively when implementing a multimedia communication based on the circuit switch domain, so that the development and application of the multimedia service in the intelligent network in the circuit switch domain may be promoted.

### Brief Description of the Drawings

Figure 1 is a schematic diagram showing the processing procedure of performing routing control on a service connection process by an intelligent network in the prior art;

Figure 2 is a schematic diagram showing the process of performing routing control on a multimedia call by the intelligent network in the CS domain in the prior art;

Figure 3 is a flow chart of the main implementing principle of the present invention;

Figure 4 is a flow chart of the implementation of distinguishing different call types by an SCP according to the invention;

Figure 5 is a flow chart of triggering an intelligent service by a switch in a trigger office according to a multimedia call;

Figure 6 is a schematic diagram showing a specific implementation in which two media stream types, i.e., a voice media stream and a video media stream, are contained in a multimedia call.

### Detailed Description of the Embodiments

The design idea of performing a routing control on a multimedia call according to the embodiments of the invention is to enable an SCP in an intelligent network to distinguish different media streams in the multimedia call based on the CS domain, and perform routing control respectively for each type of the media streams, so as to expand the future of the multimedia communication service based on the CS domain in the intelligent network.

Hereinafter, the method for routing control in the multimedia call according to the embodiments of the invention will be described in detail in conjunction with drawings.

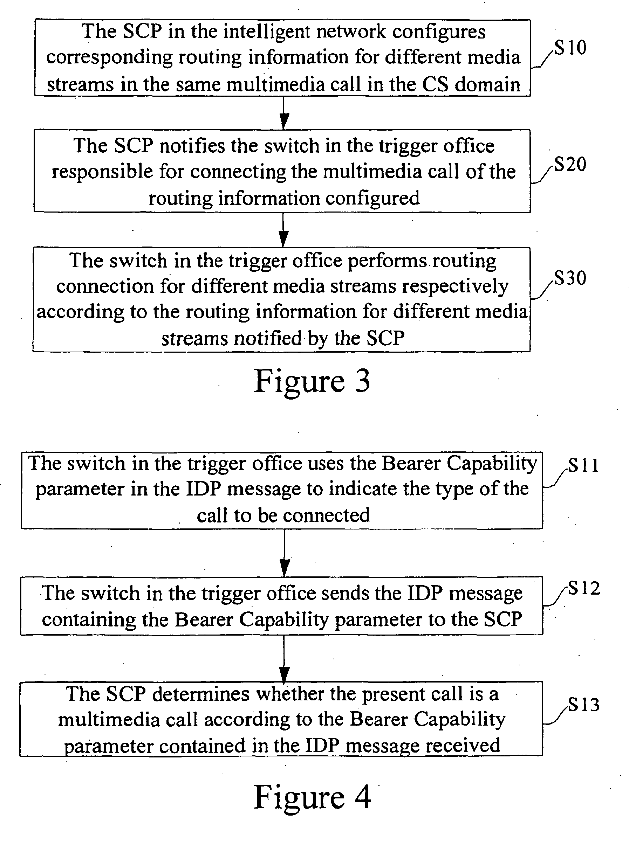

Please refer to Figure 3, which is a flow chart showing the main implementation principle of the invention. The main implementation principle is as follows:

S10: When a multimedia communication service is implemented in the CS domain in an intelligent network, the SCP in the intelligent network configures corresponding routing information for different media streams in a multimedia call. A traditional multimedia call generally contains a voice media stream and a video media stream. With the development of the technology, other media stream type may also exist in the CS domain.

Therefore, for the case that a traditional multimedia call contains a voice media stream and a video media stream, the SCP may consider by default that two different media stream types are contained in the same multimedia call, i.e. the voice media stream and the video media stream, and configure corresponding routing information for the two media stream types respectively. With the development of the technology in the future, a multimedia call may contain a plurality of media stream types. At this point, the switch in the trigger office may report the list of the media stream types contained in the connected multimedia call to the SCP, and the SCP may further configure the corresponding routing information for the different media streams contained in the same multimedia call according to the list of the media stream types received. Furthermore, the switch in the trigger office may have closed part of the media streams in the multimedia call initiated by the calling party before triggering the SCP due to the special treatment of the network. For example, the voice media stream is closed in the existing multimedia call, and there exists only the video media stream. At this point, the switch in the trigger office may report a list of the media stream types actually contained in the connected multimedia call to the SCP. The SCP may further configure the corresponding routing information for the different media streams actually contained in the same multimedia call respectively according to the received list of the actually existing media stream types.

Furthermore, if the SCP hopes that the switch in the trigger office reports the events occurring during the connection of the multimedia call, such as called party being busy, routing connection failure, or calling party abandonment, the SCP should send a Request Report Basic Call Status Module Event (RRBE) message to the switch in the trigger office, for requesting the switch in the trigger office to report information of the events occurring during the routing connection of the multimedia call.

S20: The SCP notifies the switch in the trigger office responsible for connecting the multimedia call of the routing information configured for each media stream type. The SCP may package the routing information into a Connect message sent to the switch in the trigger office, so as to achieve the object of notifying the switch in the trigger office of the routing information.

S30: The switch in the trigger office performs the routing connection for different media streams respectively according to the routing information of different media streams notified by the SCP. For example, a routing connection may be performed for the voice media stream according to the routing information of the voice media stream based on the ISDN User Part (ISUP) signaling, and a routing connection may be performed for the video media stream according to the routing information of the video media stream based on the ISUP signaling or Session Initial Protocol (SIP) signaling.

If the SCP has sent an RRBE message to the switch in the trigger office, the switch in the trigger office should package the information of the events occurring during the routing connection for each type of the media call into an Event Report Basic Call Status Module message (ERB message) and sent the message to the SCP, when the switch in the trigger office performs the routing connection for each type of the media call respectively according to the routing information of different media streams. When receiving the ERB message sent by the switch in the trigger office, the SCP sends a Release Call message to the switch in the trigger office. The switch in the trigger office releases the communication connection with the SCP when receiving the Release Call message.

The call type in the intelligent network includes generally the pure voice call and the multimedia call. The process of distinguishing the call type by the SCP is shown in Figure 4, and the detailed process is as follows:

S11: The switch in the trigger office uses, but without limitation, the Bearer Capability parameter and the Low Layer Compatibility (LLC) parameter in the Initial Detection Point (IDP) message to indicate the type of the call to be connected.

S12: The switch in the trigger office sends the IDP message containing the Bearer Capability parameter and the LLC parameter to the SCP.

S13: The SCP determines whether the type of the present call is a multimedia call according to the Bearer Capability parameter and the LLC parameter contained in the IDP message received. Only when the present call is a multimedia call, the processing as shown in Figure 3 will be performed.

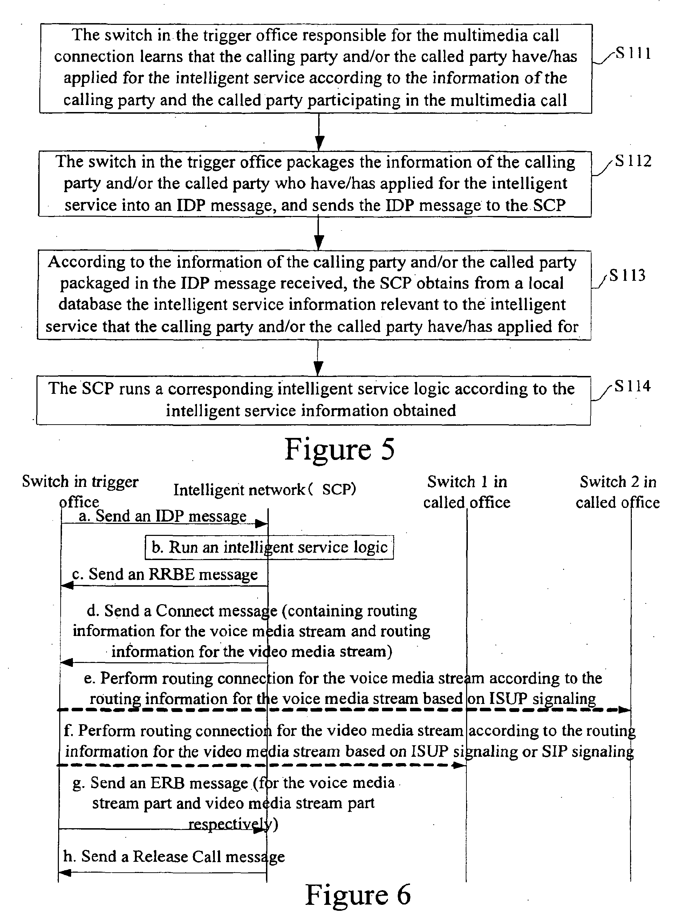

The process of triggering an intelligent service by the switch in the trigger office according to a multimedia call is as shown in Figure 5. The specific implementation process is as follows:

S111: The switch in the trigger office responsible for the multimedia call connection learns that the calling party and/or the called party have/has applied for an intelligent service according to the information of the calling party and the called party participating in the multimedia call.

S112: The switch in the trigger office packages the information of the calling party who has applied for the intelligent service, such as the calling party number, and/or the information of the called party who has applied for the intelligent service, such as the called party number, into an IDP message, and sends the IDP message to the SCP.

S113: According to the information of the calling party and/or the called party packaged in the IDP message received, the SCP obtains by indexing from a local database the intelligent service information relevant to the intelligent service that the calling party and/or the called party have/has applied for.

S114: The SCP runs a corresponding intelligent service logic according to the intelligent service information obtained.

Hereinafter, the case in which a multimedia call contains a voice media stream and a video media stream is taken as an example to illustrate the implementation process of the invention. The specific implementation process is as shown in Figure 6. The basic idea of the implementation is as follows:

When triggering the intelligent network in the process of a calling connection or a called connection, the switch in the trigger office notifies the intelligent network whether the present call is a normal voice call or a multimedia call.

If it is a multimedia call, the SCP in the intelligent network may give instruction in the Connect message that different routings should be adopted for different media streams, such as the voice media stream and the video media stream, contained in this multimedia call.

When receiving the corresponding instruction sent by the SCP in the intelligent network, the switch in the trigger office may perform different routing connections for the different media streams in the multimedia call according to the instruction.

Then, the switch in the trigger office may report the relevant event information to the SCP respectively according to the different routing connection situations of the voice media stream and the video media stream in the same multimedia call.

The specific implementing process as shown Figure 6 is as follows:

a. When a calling party initiates a call, the switch in the trigger office learns that the calling party or a called party has applied for an intelligent service according to the number of the calling party or the called party or other intelligent data. Then the switch in the trigger office sends an IDP message to an SCP in the intelligent network according to the processing flow of the intelligent call, and triggers an intelligent flow in the intelligent network, so as to establish a control relation between the switch in the trigger office and the intelligent network. The IDP message sent by the switch in the trigger office contains the number of the calling party and/or the called party who have/has applied for the intelligent service as well as a Bearer Capability parameter and a Low Layer Compatibility (LLC) parameter indicating whether the present call is a multimedia call.

When processing the IDP message received, the SCP determines whether the Bearer Capability parameter and the LLC parameter contained in the IDP message indicate a multimedia call. (Hereinafter, the subsequent flow is only directed to the multimedia call. The processing of the pure voice call is disclosed in the prior art, so it will not be described again.) Then the SCP queries and obtains the intelligent service information relevant to the intelligent service, which the calling party and/or the called party have/has applied for, according to the information of the calling party and/or the called party who have/has applied for the intelligent service in the IDP message as well as according to the database information recorded in the SCP. Then the SCP runs a corresponding intelligent service logic according to the intelligent service information obtained.

c. If the intelligent network hopes that the switch in the trigger office reports the events occurring during the call connection, such as called party being busy, routing connection failure, or calling party abandonment, so that the switch in the trigger office can send a Request Report Basic Call Status Module Event (RRBE) message to the SCP in sequence during the implementation of the routing connection, such as the calling party releasing the call and performing a rerouting. By sending the RRBE message, the intelligent network configures the item of the events which the intelligent network hopes the switch in the trigger office to report.

d. The SCP in the intelligent network sends a Connect message. The Connect message contains different routing control information and routing parameters for the voice media stream and the video media stream. For example, a calling party initiates a multimedia call, but the called party is a 2G user who cannot support the video media stream. When this situation is recognized, the intelligent network routes the voice media stream to the called party in a normal way, and routes the video media stream to a video display platform.

e and f. The switch in the trigger office performs routing connection for the voice media stream and the video media stream in the multimedia call respectively according to the routing address information for the voice media stream and the video media stream contained in the Connect message. In other words, a multimedia call is divided into independent voice media stream and video media stream, and the routing connections for the voice media stream and the video media stream are performed based on the respective routing information. In the above example, the switch in the trigger office establishes a voice media stream communication with the called party, and establishes a video media stream communication with the video play platform. For example, the connection process for the voice media stream may be performed based on the ISUP signaling mode, and the connection process for the video media stream may be performed based on the ISUP signaling mode or the SIP signaling mode. When the voice media stream and the video media stream are established successfully, the voice media stream and the video media stream are still combined as a multimedia call when the switch in the trigger office transmits the corresponding media streams to the calling party. In the above example, in a multimedia call, the calling party is able to see the video image information played for him by the video play platform during the voice communication with the called party.

g. Because the switch in the trigger office needs to perform connection for the two different media streams in a multimedia call respectively, different events may occur during the connection process of the voice media stream and the video media stream. For example, the voice media stream communication connection has been established, but failure occurs in the video media stream communication connection. Therefore, when sending the ERB message to the SCP, it is required to distinguish the events occurring in the different media streams and the corresponding reasons. When the call is terminated, for example, when an event of calling party hanging up occurs, if this event is configured in the RRBE message by the intelligent network, the switch in the trigger office achieves the object of reporting the events occurred to the SCP in the intelligent network by sending the ERB message to the switch in the trigger office.

h. When receiving the ERB message sent by the switch in the trigger office, the SCP sends a Release Call message to notify the switch in the trigger office to release the call control between the switch and the intelligent network.

From above, it can be seen that with the method for routing control in the multimedia call according to the invention, the intelligent network may perform different connect control according to different media types during the multimedia call connection, and obtain different connection status.

With the invention, different media streams in a multimedia call may be redirected to different destination points. Therefore, abundant content sources may be provided for the user, and requirements of different organs of the user may be satisfied.

A device for routing control for the multimedia call according to the invention is disposed in the intelligent network. The device includes:

a routing information configuring unit, which is adapted to configure the corresponding routing information for different media streams in a multimedia call respectively; and

a routing information notifying unit, which is adapted to notify the switch in the trigger office responsible for connecting the multimedia call of the routing information configured.

In the embodiment of the invention, the routing information configuring unit configures the corresponding routing information for the different media streams in the same multimedia call according to a list of the media stream types reported by the switch in the trigger office.

The routing information notifying unit notifies the switch in the trigger office of the routing information by packaging the routing information into a Connect message which is sent to the switch in the trigger office.

The device for routing control for the multimedia call further includes a call type determining unit, which is adapted to determine whether the present call is a multimedia call according to the Bearer Capability parameter and the Low Layer Compatibility (LLC) parameter in the Initial Detection Point (IDP) message. If yes, the call type determining unit triggers the routing information configuring unit.

The device for routing control for the multimedia call further includes an event report requesting unit, which is adapted to send a Request Report Basic Call Status Module Event (RRBE) message to the switch in the trigger office, so as to request the switch in the trigger office to report the information of the events occurring during the routing connection of the multimedia call.

The present invention further provides a device for routing control for the multimedia call, which is disposed in a switch in the circuit switching domain. The device for routing control includes a routing connect unit, which is adapted to perform routing connection for different media streams respectively according to the routing information of different media streams notified by the service control point in the intelligent network.

The device for routing control for the multimedia call may further include a media stream type reporting unit, which is adapted to report a list of the type of the media stream contained in the multimedia call to the SCP.

The device for routing control for the multimedia call may further include: a call type indicating unit, which is adapted to indicate the type of the call to be connected by using the Bearer Capability parameter and the Low Layer Compatibility (LLC) parameter in the Initial Detection Point (IDP) message; and a sending unit, which is adapted to send the Initial Detection Point (IDP) message, into which the Bearer Capability parameter and the Low Layer Compatibility (LLC) parameter are packaged, to the SCP.

The device for routing control for the multimedia call may further include a user information sending unit, which is adapted to package the information of the calling party and/or the called party, who have/has applied for the intelligent service, into the IDP message and send the message to the SCP.

The device for routing control for the multimedia call may further include an event reporting unit, which is adapted to package the information of the events occurring during the routing connection for each type of the media call into an Event Report Basic Call Status Module message (ERB message) and send the message to the SCP.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims.

## Claims

1. A method for routing control in a multimedia call in an intelligent network, comprising:
sending (S12, S112), by a switch in a trigger office, an Initial Detection Point, IDP, message containing information of a calling party and/or a called party, parameters indicating a type of the call to a service control point, SCP, when the switch in the trigger office learns (S111) that a calling party or a called party has applied for an intelligent service according to the information of the calling party and the called party;
determining (S13), by the SCP, whether the type of the call is a multimedia call and obtaining (S113) the intelligent service information relevant to the intelligent service that the calling party and/or the called party have/has applied for according to the IDP message received;
configuring (S10), by the SCP, corresponding routing information for different media streams in the same multimedia call in the circuit switch domain when running (S114) a corresponding intelligent service logic according to the intelligent service information obtained;
notifying (S20), by the SCP, the switch in a trigger office responsible for connecting the multimedia call of the routing information configured for the different media streams in a Connect message, and
performing (S30), by the switch in the trigger office, routing connection for the different media streams according to the routing information for the different media streams received.

2. The method for routing control in the multimedia call according to claim 1, further comprises a process of reporting, by the switch in the trigger office responsible for connecting the multimedia call, a list of media stream types contained in the multimedia call to the service control point, before the process of configuring the corresponding routing information; and
the process of configuring the corresponding routing information specifically comprises: configuring, by the service control point, the corresponding routing information for the different media streams in the same multimedia call according to the list of the media stream types reported by the switch in the trigger office.

3. The method for routing control in the multimedia call according to claim 2, wherein the routing connection comprises: performing, by the switch in the trigger office, the routing connection for the voice media stream according to the routing information of the voice media stream based on an ISDN User Part signaling.

4. The method for routing control in the multimedia call according to claim 2, wherein the routing connection comprises: performing, by the switch in the trigger office, the routing connection for the video media stream according to the routing information of the video media stream based on the ISDN User Part signaling or a Session Initial Protocol signaling.

5. The method for routing control in the multimedia call according to claim 1 or 2, wherein the method further comprises: indicating, by the switch in the trigger office, the type of a call to be connected with a Bearer Capability parameter and a Low Layer Compatibility parameter in an Initial Detection Point message; and
determining, by the service control point, whether the present call is a multimedia call according to the Bearer Capability parameter and the Low Layer Compatibility parameter in the Initial Detection Point message received; if yes, the process of configuring the corresponding routing information is performed.

6. The method for routing control in the multimedia call according to claim 1 or 2, wherein between the process of configuring the corresponding routing information and the process of notifying the switch in the trigger office responsible for connecting the multimedia call of the routing information configured, the method further comprises:
sending, by the service control point, a Request Report Basic Call Status Module Event message to the switch in the trigger office, for requesting the switch in the trigger office to report information of events occurring during the routing connection of the multimedia call;
after the routing connection, packaging, by the switch in the trigger office, the information of the events occurring during the routing connection of the multimedia call into an Event Report Basic Call Status Module message, and sending the message to the service control point.

7. The method for routing control in the multimedia call according to claim6, further comprises: sending, by the service control point, a Release Call message to the switch in the trigger office after the Event Report Basic Call Status Module message is received; and releasing, by the switch in the trigger office, a communication connection with the service control point when the Release Call message is received.

8. A device for routing control in a multimedia call disposed in an intelligent network, comprising:
a call type determining unit, adapted to determine whether a present call is a multimedia call and obtain intelligent service information relevant to an intelligent service that a calling party and/or a called party have/has applied for according to an Initial Detection Point message containing information of the calling party and/or the called party, parameters indicating a type of the call, and if the present call is a multimedia call, the call type determining unit triggers the routing information configuring unit;
a routing information configuring unit, adapted to configure corresponding routing information for different media streams in the multimedia call respectively in the circuit switch domain when running a corresponding intelligent service logic according to the intelligent service information obtained; and
a routing information notifying unit, adapted to notify a switch in a trigger office responsible for connecting the multimedia call of the routing information configured for the different media streams in a Connect message.

9. The device for routing control in the multimedia call according to claim 8, wherein the routing information configuring unit configures the corresponding routing information for the different media streams in the multimedia call respectively according to a list of media stream types reported by the switch in the trigger office.

10. The device for routing control in the multimedia call according to claim 8 or 9, wherein
the call type determining unit, adapted to determine whether the present call is a multimedia call according to a Bearer Capability parameter and a Low Layer Compatibility parameter in an Initial Detection Point message received, if yes, the call type determining unit triggers the routing information configuring unit.

11. The device for routing control in the multimedia call according to claim 8 or 9, wherein the routing information notifying unit notifies the switch in the trigger office of the routing information by packaging the routing information into a Connect message which is sent to the switch in the trigger office.

12. The device for routing control in the multimedia call according to claim 8 or 9, further comprises: an event report requesting unit, adapted to send a Request Report Basic Call Status Module Event message to the switch in the trigger office, so as to request the switch in the trigger office to report information of events occurring during the routing connection of the multimedia call.

## Patentansprüche

1. Verfahren zur Routing-Steuerung bei einem Multimedia-Anruf in einem intelligenten Netz, mit den folgenden Schritten:
eine Vermittlung in einer Trigger-Vermittlungsstelle sendet (S 12, S112) eine Nachricht des Initial Detection Point IDP, die Informationen eines anrufenden Teilnehmers und/oder eines angerufenen Teilnehmers und Parameter, die eine Art des Anrufs angeben, enthält, zu einem Service Control Point SCP, wenn die Vermittlung in der Trigger-Vermittlungsstelle gemäß den Informationen des anrufenden Teilnehmers und des angerufenen Teilnehmers erfährt (S111), dass ein anrufender Teilnehmer oder ein angerufener Teilnehmer um einen intelligenten Dienst nachgesucht hat;
der SCP bestimmt (S 13), ob die Art des Anrufs ein Multimedia-Anruf ist, und erhält (S 113) die Informationen des intelligenten Dienstes, die für den intelligenten Dienst, um den der anrufende Teilnehmer und/oder der angerufene Teilnehmer nachgesucht hat/haben, relevant sind, gemäß der empfangenen IDP-Nachricht;
der SCP konfiguriert (S 10) entsprechende Routing-Informationen für verschiedene Medienströme in demselben Multimedia-Anruf in der leitungsvermittelten Domäne beim Laufenlassen (S114) einer entsprechenden Logik des intelligenten Dienstes gemäß den erhaltenen Informationen des intelligenten Dienstes;
der SCP benachrichtigt (S20) die Vermittlung in einer Trigger-Vermittlungsstelle,
die für das Verbinden des Multimedia-Anrufs verantwortlich ist, über die für die verschiedenen Medienströme konfigurierten Routing-Informationen in einer Connect-Nachricht und
die Vermittlung in der Trigger-Vermittlungsstelle führt die Routing-Verbindung für die verschiedenen Medienströme gemäß den empfangenen Routing-Informationen für die verschiedenen Medienströme durch (S30).

2. Verfahren zur Routing-Steuerung bei dem Multimedia-Anruf nach Anspruch 1, das ferner einen folgenden Prozess umfasst: die Vermittlung in der Trigger-Vermittlungsstelle, die für das Verbinden des Multimedia-Anrufs verantwortlich ist, meldet eine Liste von in dem Multimedia-Anruf enthaltenen Medienstromtypen an den Service Control Point vor dem Prozess des Konfigurierens der entsprechenden Routing-Informationen; und
der Prozess des Konfigurierens der entsprechenden Routing-Informationen umfasst spezifisch Folgendes: der Service Control Point konfiguriert die entsprechenden Routing-Informationen für die verschiedenen Medienströme in demselben Multimedia-Anruf gemäß der durch die Vermittlung in der Trigger-Vermittlungsstelle gemeldeten Liste der Medienstromtypen.

3. Verfahren zur Routing-Steuerung bei dem Multimedia-Anruf nach Anspruch 2, wobei die Routing-Verbindung Folgendes umfasst: die Vermittlung in der Trigger-Vermittlungsstelle führt die Routing-Verbindung für den Sprach-Medienstrom gemäß den Routing-Informationen des Sprach-Medienstroms auf der Basis einer Signalisierung des ISDN User Part durch.

4. Verfahren zur Routing-Steuerung bei dem Multimedia-Anruf nach Anspruch 2, wobei die Routing-Verbindung Folgendes umfasst: die Vermittlung in der Trigger-Vermittlungsstelle führt die Routing-Verbindung für den Video-Medienstrom gemäß den Routing-Informationen des Video-Medienstroms auf der Basis der Signalisierung des ISDN User Part oder einer Signalisierung des Session Initial Protocol durch.

5. Verfahren zur Routing-Steuerung bei dem Multimedia-Anruf nach Anspruch 1 oder 2, wobei das Verfahren ferner Folgendes umfasst: die Vermittlung in der Trigger-Vermittlungsstelle gibt die Art eines zu verbindenden Anrufs mit einem Parameter Bearer Capability und einem Parameter Low Layer Compatibility in einer Nachricht Initial Detection Point an; und
der Service Control Point bestimmt gemäß dem Parameter Bearer Capability und dem Parameter Low Layer Compatibility in der empfangenen Nachricht Initial Detection Point, ob der aktuelle Anruf ein Multimedia-Anruf ist; wenn ja, wird der Prozess des Konfigurierens der entsprechenden Routing-Informationen durchgeführt.

6. Verfahren zur Routing-Steuerung bei dem Multimedia-Anruf nach Anspruch 1 oder 2, wobei zwischen dem Prozess des Konfigurierens der entsprechenden Routing-Informationen und dem Prozess des Benachrichtigens der Vermittlung in der Trigger-Vermittlungsstelle, die für das Verbinden des Multimedia-Anrufs verantwortlich ist, über die konfigurierten Routing-Informationen das Verfahren ferner Folgendes umfasst: der Service Control Point sendet eine Nachricht Request Report Basic Call Status Module Event zu der Vermittlung in der Trigger-Vermittlungsstelle, um von der Vermittlung in der Trigger-Vermittlungsstelle anzufordern, Informationen von Ereignissen zu melden, die während der Routing-Verbindung des Multimedia-Anrufs auftreten;
nach der Routing-Verbindung verpackt die Vermittlung in der Trigger-Vermittlungsstelle die Informationen der Ereignisse, die während der Routing-Verbindung des Multimedia-Anrufs auftreten, in eine Nachricht Event Report Basic Call Status Module und sendet die Nachricht zu dem Service Control Point.

7. Verfahren zur Routing-Steuerung bei dem Multimedia-Anruf nach Anspruch 6, ferner mit den folgenden Schritten: der Service Control Point sendet eine Nachricht Release Call zu der Vermittlung in der Trigger-Vermittlungsstelle, nachdem die Nachricht Event Report Basic Call Status Module empfangen wird, und die Vermittlung in der Trigger-Vermittlungsstelle gibt eine Kommunikationsverbindung mit dem Service Control Point frei, wenn die Nachricht Release Call empfangen wird.

8. Einrichtung zur Routing-Steuerung bei einem Multimedia-Anruf, die in einem intelligenten Netz angeordnet ist, umfassend:
eine Anruftyp-Bestimmungseinheit, die dafür ausgelegt ist, zu bestimmen, ob ein aktueller Anruf ein Multimedia-Anruf ist, und Informationen des intelligenten Dienstes zu erhalten, die für einen intelligenten Dienst, um den ein anrufender Teilnehmer und/oder ein angerufener Teilnehmer nachgesucht hat/haben, relevant sind, gemäß einer Nachricht des Initial Detection Point, die Informationen über den anrufenden Teilnehmer und/oder den angerufenen Teilnehmer, Parameter, die die Art des Anrufs angeben, enthält, und wenn der aktuelle Anruf ein Multimedia-Anruf ist, triggert die Anruftyp-Bestimmungseinheit die Routing-Informationskonfigurationseinheit;
eine Routing-Informationskonfigurationseinheit, die dafür ausgelegt ist, entsprechende Routing-Informationen für verschiedene Medienströme bei dem Multimedia-Anruf jeweils in der leitungsvermittelten Domäne beim Laufenlassen einer entsprechenden Logik des intelligenten Dienstes gemäß den erhaltenen Informationen des intelligenten Dienstes zu konfigurieren; und
eine Routing-Informationsbenachrichtigungseinheit, die dafür ausgelegt ist, eine Vermittlung in einer Trigger-Vermittlungsstelle, die für das Verbinden des Multimedia-Anrufs verantwortlich ist, über die für die verschiedenen Medienströme konfigurierten Routing-Informationen in einer Connect-Nachricht zu benachrichtigen.

9. Einrichtung zur Routing-Steuerung bei dem Multimedia-Anruf nach Anspruch 8, wobei die Routing-Informationskonfigurationseinheit die entsprechenden Routing-Informationen für die verschiedenen Medienströme bei dem Multimedia-Anruf jeweils gemäß einer Liste von Medienstromtypen konfiguriert, die durch die Vermittlung in der Trigger-Vermittlungsstelle gemeldet wird.

10. Einrichtung zur Routing-Steuerung bei dem Multimedia-Anruf nach Anspruch 8 oder 9, wobei
die Anruftyp-Bestimmungseinheit dafür ausgelegt ist, gemäß einem Parameter Bearer Capability und einem Parameter Low Layer Compatibility in einer empfangenen Nachricht des Initial Detection Point zu bestimmen, ob der aktuelle Anruf ein Multimedia-Anruf ist, und wenn ja, triggert die Anruftyp-Bestimmungseinheit die Routing-Informationskonfigurationseinheit.

11. Einrichtung zur Routing-Steuerung bei dem Multimedia-Anruf nach Anspruch 8 oder 9, wobei die Routing-Informationsbenachrichtigungseinheit die Vermittlung in der Trigger-Vermittlungsstelle über die Routing-Informationen benachrichtigt, indem die Routing-Informationen in eine Connect-Nachricht verpackt werden, die zu der Vermittlung in der Trigger-Vermittlungsstelle gesendet wird.

12. Einrichtung zur Routing-Steuerung bei dem Multimedia-Anruf nach Anspruch 8 oder 9, ferner umfassend: eine Ereignismeldungs-Anforderungseinheit, die dafür ausgelegt ist, eine Nachricht Request Report Basic Call Status Module Event zu der Vermittlung in der Trigger-Vermittlungsstelle zu senden, um so von der Vermittlung in der Trigger-Vermittlungsstelle anzufordern, Informationen über Ereignisse zu melden, die während der Routing-Verbindung des Multimedia-Anrufs auftreten.

## Revendications

1. Procédé de gestion d'acheminement d'un appel multimédia dans un réseau intelligent, le procédé comprenant les étapes consistant à :
transmettre (S12, S112), au moyen d'un commutateur dans un central de déclenchement, un message de point de détection initial, dit IDP, contenant des informations sur un appelant et/ou un appelé, des paramètres indiquant un type de l'appel, à un point de commande de services, dit SCP, lorsque le commutateur dans le central de déclenchement apprend (S111) qu'un appelant ou un appelé a sollicité un service intelligent à partir des informations sur l'appelant et l'appelé ;
établir (S13), au moyen du SCP, si le type de l'appel est un appel multimédia et
obtenir (S113) les informations de service intelligent concernant le service intelligent que l'appelant et/ou l'appelé ont/a sollicité à partir du message IDP reçu ;
configurer (S10), au moyen du SCP, des informations d'acheminement correspondantes pour différents flux médias dans le même appel multimédia dans le domaine de commutation de circuits lors de l'exécution (S114) d'une logique de service intelligent correspondante à partir des informations de service intelligent obtenues ;
notifier (S20), au moyen du SCP, au commutateur dans un central de déclenchement chargé de connecter l'appel multimédia les informations d'acheminement configurées pour les différents flux médias dans un message du type Connect, et
procéder (S30), au moyen du commutateur dans le central de déclenchement, à une connexion d'acheminement pour les différents flux médias à partir des informations d'acheminement pour les différents flux médias reçus.

2. Procédé de gestion d'acheminement de l'appel multimédia selon la revendication 1, comprenant en outre l'étape consistant à signaler, au moyen du commutateur dans le central de déclenchement chargé de connecter l'appel multimédia, une liste de types de flux médias contenus dans l'appel multimédia au point de commande de services, préalablement à l'étape consistant à configurer les informations d'acheminement correspondantes ; et
l'étape consistant à configurer les informations d'acheminement correspondantes comprenant plus particulièrement l'étape consistant à configurer, au moyen du point de commande de services, les informations d'acheminement correspondantes pour les différents flux médias dans le même appel multimédia à partir de la liste des types de flux médias signalée par le commutateur dans le central de déclenchement.

3. Procédé de gestion d'acheminement de l'appel multimédia selon la revendication 2, l'étape consistant à procéder à la connexion d'acheminement comprenant l'étape consistant à procéder, au moyen du commutateur dans le central de déclenchement, à la connexion d'acheminement pour le flux média vocal à partir des informations d'acheminement du flux média vocal sur la base d'une signalisation de partie usager ISDN.

4. Procédé de gestion d'acheminement de l'appel multimédia selon la revendication 2, l'étape consistant à procéder à la connexion d'acheminement comprenant l'étape consistant à procéder, au moyen du commutateur dans le central de déclenchement, à la connexion d'acheminement pour le flux média vidéo à partir des informations d'acheminement du flux média vidéo sur la base de la signalisation de partie usager ISDN ou d'une signalisation de protocole d'initialisation de session.

5. Procédé de gestion d'acheminement de l'appel multimédia selon la revendication 1 ou 2, comprenant en outre les étapes consistant à :
indiquer, au moyen du commutateur dans le central de déclenchement, le type d'un appel à connecter par un paramètre de capacité support et un paramètre de compatibilité des couches inférieures dans un message de point de détection initial ;
et
établir, au moyen du point de commande de services, si l'appel en cours est un appel multimédia à partir du paramètre de capacité support et du paramètre de compatibilité des couches inférieures dans le message de point de détection initial reçu ; et, le cas échéant, mettre en oeuvre l'étape consistant à configurer les informations d'acheminement correspondantes.

6. Procédé de gestion d'acheminement de l'appel multimédia selon la revendication 1 ou 2, comprenant en outre, entre l'étape consistant à configurer les informations d'acheminement correspondantes et l'étape consistant à notifier au commutateur dans le central de déclenchement chargé de connecter l'appel multimédia les informations d'acheminement configurées, les étapes consistant à :
transmettre, au moyen du point de commande de services, un message du type Request Report Basic Call Status Module Event au commutateur dans le central de déclenchement pour demander au commutateur dans le central de déclenchement de signaler des informations sur des événements se produisant au cours de la connexion d'acheminement de l'appel multimédia ;
suite à la connexion d'acheminement, empaqueter, au moyen du commutateur dans le central d'acheminement, les informations sur les événements se produisant au cours de la connexion d'acheminement de l'appel multimédia dans un message du type Event Report Basic Call Status Module ; et
transmettre le message au point de commande de services.

7. Procédé de gestion d'acheminement de l'appel multimédia selon la revendication 6, comprenant en outre les étapes consistant à :
transmettre, au moyen du point de commande de services, un message du type Release Call au commutateur dans le central de déclenchement suite à la réception du message du type Event Report Basic Call Status Module ; et
libérer, au moyen du commutateur dans le central de déclenchement, une connexion de communication avec le point de commande de services suite à la réception du message du type Release Call.

8. Dispositif de gestion d'acheminement d'un appel multimédia disposé dans un réseau intelligent, comprenant :
une unité d'établissement de type d'appel, conçue pour établir si un appel en cours est un appel multimédia et pour obtenir des informations de service intelligent concernant un service intelligent qu'un appelant et/ou un appelé ont/a sollicité à partir d'un message de point de détection initial contenant des informations sur l'appelant et/ou l'appelé, des paramètres indiquant un type de l'appel, et, si l'appel en cours est un appel multimédia, pour déclencher l'unité de configuration d'informations d'acheminement ;
une unité de configuration d'informations d'acheminement, conçue pour configurer des informations d'acheminement correspondantes pour différents flux médias dans l'appel multimédia respectivement dans le domaine de commutation de circuits lors de l'exécution d'une logique de service intelligent correspondante à partir des informations de service intelligent obtenues ; et
une unité de notification d'informations d'acheminement, conçue pour notifier à un commutateur dans un central de déclenchement chargé de connecter l'appel multimédia les informations d'acheminement configurées pour les différents flux médias dans un message du type Connect.

9. Dispositif de gestion d'acheminement de l'appel multimédia selon la revendication 8,
l'unité de configuration d'informations d'acheminement configurant les informations d'acheminement correspondantes pour les différents flux médias dans l'appel multimédia respectivement à partir d'une liste de types de flux médias signalée par le commutateur dans le central de déclenchement.

10. Dispositif de gestion d'acheminement de l'appel multimédia selon la revendication 8 ou 9,
l'unité d'établissement de type d'appel étant conçue pour établir si l'appel en cours est un appel multimédia à partir d'un paramètre de capacité support et d'un paramètre de compatibilité des couches inférieures dans un message de point de détection initial reçu ; et, le cas échéant, pour déclencher l'unité de configuration d'informations d'acheminement.

11. Dispositif de gestion d'acheminement de l'appel multimédia selon la revendication 8 ou 9,
l'unité de notification d'informations d'acheminement notifiant au commutateur dans le central de déclenchement les informations d'acheminement en empaquetant les informations d'acheminement dans un message du type Connect qui est transmis au commutateur dans le central de déclenchement.

12. Dispositif de gestion d'acheminement de l'appel multimédia selon la revendication 8 ou 9, comprenant en outre une unité de demande de signalement d'événements, conçue pour transmettre un message du type Request Report Basic Call Status Module Event au commutateur dans le central de déclenchement pour demander au commutateur dans le central de déclenchement de signaler des informations sur des événements se produisant au cours de la connexion d'acheminement de l'appel multimédia.
